# EUROPEAN PATENT SPECIFICATION

(11) **EP 0 536 791 B1**
(45) Date of publication and mention of the grant of the patent: **15.03.2000**
(21) Application number: 92117329.0
(22) Date of filing: 09.10.1992
(51) Int. Cl.: C09D 5/03

(54) **Powdered paint**
Pulverlack
Peinture en poudre

(30) Priority: 11.10.1991 JP 26402591
(43) Date of publication of application: 14.04.1993
(73) Proprietor: Nippon Paint Co., Ltd., Kita-ku, Osaka-shi, Osaka 531 (JP)
(72) Inventor: Ichimura, Hideki, Suita-shi, Osaka (JP); Uenaka, Akimitsu, Suita-shi, Osaka (JP); Toyoda, Yuji, Takatsuki-shi, Osaka (JP); Shiomi, Yasushi, Suita-shi, Osaka (JP); Tsutsui, Koichi, Tsuzukigun, Kyoto (JP)
(74) Representative: Popp, Eugen, Dr.

(56) References cited:
- EP-A- 0 389 080
- EP-A- 0 497 526
- WO-A-92/10551
- FR-A- 2 226 258
- PATENT ABSTRACTS OF JAPAN vol. 8, no. 98 (C-221)(1535) 9 May 1984
- DATABASE WPIL Section Ch, Week 8937, 8 November 1989 Derwent Publications Ltd., London, GB; AN 89-268173

## Description

The present invention relates to paints, and in particular to powdered paints.

The U.K. patent specification GB-A 1 437 849 (corresponding to FR-A 2 226 258) discloses a process for the production of a flowable particulate including spray drying a solvent solution of at least one thermoplastic resin. The dried particles are ground and shattered to produce a coating powder in which essentially all of the particles are irregular in shape having jagged edges and range in size from 1 µm to 100 µm.

The European patent application EP-A 0 389 080 discloses a powder coating composed of resin powder particles, each particle carrying on its surface a number of microparticles having an average diameter of 0.001 µm to 10 µm. The microparticles are formed of a resin having a glass transition temperature of 50°C to 150°C.

The Patent Abstracts of Japan, Vol. 8, No. 98 (C-221) (1535) relating to JP-A 59-012974 discloses a slurry composition comprising powdered paint dispersed in a vinyl oligomer containing crosslinked groups. The mixture is melted and kneaded in an extruder and pulverized to an average particle size of preferably 5 µm to 20 µm. The reference gives no information on the proportion of particles having a diameter of 5 µm or less.

The PCT publication WO92/10551 is a document to be considered for prior art under Art. 54(3) EPC. The reference discloses a powdered varnish comprising at least one polyester and at least on epoxy resin, where the powdered varnish particles have a particle size between 1 µm and 100 µm. The average particle size is between 5 µm and 20 µm.

The European patent application EP-A 0 497 526 is also to be considered prior art under Art. 54(3) EPC. The reference discloses a method for producing a powder coating having a smaller average particle diameter and a narrower particle size distribution. The method comprises introducing coating materials between a rotor and a stator, the rotor having multiple convex lines extending in the direction of a shaft supporting the rotor. The stator is placed opposed to the rotor and also comprises multiple convex lines extending in the direction of the shaft. The opposing surfaces of the rotating rotor and the stator are such as to provide a finer pulverisation of the coating mixture.

The Abstract DATABASE WPIL, Section Ch, Week 8937, November 8, 1989, Derwent Publications Ltd., AN 89-268173 (JP-A-1 196 068) discloses a toner for developing electrostatic latent images. The toner comprises basic particles comprising a binder resin, pigment and wax. Added particles containing a resin having a glass transition temperature of 50°C or higher are fixed on or embedded in the surface of the base particles by mechanical impact. The mean particle size of the base particles is 5 µm to 20 µm, while the added particles preferably have a size of less than 2 µm.

A general powdered paint is composed mainly of a particle mass produced by grinding pellets obtained from a melted and kneaded raw material containing, e.g., a binder resin, a pigment, a curing agent and a surface conditioner. The mean particle diameter of the particle mass composing such a powdered paint is usually about 30 µm.

The formation of a film coating of the powdered paint is performed by applying it to an object to be coated through such a method as electrostatic spray coating or fluidized-bed dip coating. The powdered paint is then subjected to a baking treatment, whereby the binder resin in the particle mass melts, forming a continuous film coating.

However, the aforementioned conventional powdered paint cannot provide a large-scale and smooth film coating. In particular, wherein a thin film coating is formed, its smoothness and appearance are liable to deteriorate.

An object of the present invention is to form a film coating having good smoothness and appearance.

A powdered paint in accordance with the present invention is defined in claim 1. The powdered paint may further contain fine resin particulates having a glass transition point of 50 to 150° C.

A powdered paint in accordance with the method of the present invention is defined in claim 15.

Preferably the method includes producing pellets from a melted and kneaded particle mass of raw material for powdered paint, in which the proportion of the raw material particles of diameter under 700 µm is at least 40 percent by weight; and grinding the pellets into a particle mass.

The present method may further comprise a step of mixing the particle mass with fine resin particulates having a glass transition point of 50 to 150° C, and a mean particle diameter less than that of the particle mass.

A method of applying a powdered paint is also provided as defined in claim 20.

These and other objects of the present invention will become apparent from the following detailed description.

A main component of a powdered paint in accordance with the present invention is a pulverized synthetic resin serving as a binder. This resin may be selected from among thermosetting resins and thermoplastic resins. When a thermosetting resin is used for the powdered paint, the synthetic resin can be epoxy resin, acrylic resin and polyester resin. The synthetic resin does not consist essentially of only a polyester resin and an epoxy resin. With an epoxy resin, phthalic anhydride, dicyandiimide and acrylic resins may be added thereto, if desired. With an acrylic resin, polyhydric carboxylic acids, epoxy resins and melamine resins may be added thereto, if desired. With a polyester resin, polybasic acid, melamine resins and block isocyanate may be added thereto, if desired.

On the other hand, when a thermoplastic resin is used for the powdered paint, the synthetic resin can be a vinyl resin such as poly vinyl chloride, polyethylene resin and polyamide resin, for example.

The aforementioned powdered paint may contain a pigment such as titanium dioxide, red iron oxide, yellow iron oxide, carbon black, copper phthalocyanine blue, copper phthalocyanine green, and quinacridone red pigment. The powdered paint also may contain a surface conditioner such as polysiloxane or acrylic resin; plasticizers; ultraviolet absorbers; antioxidants; pinhole controlling agent; pigment dispersing agents; and curing catalysts such as amine compounds, imidazole compounds and polymerization initiators; as well as other additives, such as further types of resin. These pigments and additives may be contained in the synthetic resin particles, or may be included as particles other than the synthetic resin particles.

The mean particle diameter of the powdered paint in accordance with the present invention is in the range of 5 to 20 µm, preferably 8 to 16 µm. When the mean particle diameter is less than 5 µm, the fluidity of the powdered paint in heat treatment is lowered so that it becomes difficult to form a dense and uniform film coating. Conversely, when the mean particle diameter is more than 20 µm, the smoothness of the film coating is detracted, and aspects of its appearance such as its glossiness deteriorate.

The mean particle diameter can be measured by an apparatus for measuring particle diameter utilizing laser scattering, such as that manufactured by the SEISIN Corp. and sold under the trademark "LASTER SIZER PRO-7000".

Fine resin particulates may be joined to the surface of each particle composing the powdered paint. The term "joined" means herein either of two situations, in one of which the fine resin particulates adhere to the surface of the particles composing the powdered paint, and in the other of which the fine resin particulates are slightly embedded in the surface thereof. When the powdered paint is thus joined with fine resin particulates, the particles composing the powdered paint are kept from direct inter-particulate contact, which results in preventing the powdered paint from clotting during storage and in improving fluidity during the baking treatment. Consequently, it becomes possible to utilize synthetic resins having a low glass transition point (Tg point), e.g. 40°C, as a binder component. When the powdered paint is baked, the fine resin particulates thus melt together with the binder resin in forming a film coating. Therefore, the film coating is not liable to exhibit surface irregularities or other such defects in appearance which might otherwise be caused by the fine resin particulates.

These fine resin particulates are preferably made of the same type of resin as the synthetic resin used for the powdered paint. From a practical viewpoint in manufacturing, vinyl resins, acrylic resins, epoxy resins, polyester resins and melamine resins are those usually employed. In particular, vinyl resins are preferred, both with regard to manufacturing simplicity, and in their large potential for design. It is necessary that the resins composing the fine resin particulates do not have a Tg point of less than 50°C. Wherein the Tg point is less than 50°C, there is no noticeable effect from the joining of the fine resin particulates. The upper limit of the Tg point is 150° C. Tg points greater than 150°C do not further affect the outcome. The preferred range of the Tg point is 70 to 120° C. The mean particle diameter of the aforementioned fine resin particulates is set to be necessarily less than that of the powered paint. The preferred range of the mean particle diameter is 0.001 to 10 µm, more preferably 0.01 to 5 µm. The quantity of fine resin particulates in addition to the powdered paint is adjusted to 0.05 to 35 percent by weight, more preferably 0.1 to 10 percent by weight, expressed as a solid-weight ratio. When the quantity in addition is less than 0.05 percent by weight, there is no noticeable effect from the addition of the fine resin particulates. Conversely, when it is greater than 35 percent by weight, the appearance of the film coating is worsened.

The aforementioned fine resin particulates can be manufactured by, for example, emulsion polymerization or suspension polymerization. Then, they can be obtained by grinding and classifying the manufactured resins by solution polymerization or bulk polymerization.

The following describes a method of manufacturing the above-described powdered paint.

First the above-mentioned synthetic resin and pigment, and such additives as a surface conditioner, a plasticizer, an ultraviolet absorber, an antioxidant, pinhole controlling agent a pigment dispersing agent or a catalyst are prepared, and then are blended homogeneously through a mixer. A conventional mixer such as a Henschel mixer, ball mill, or Banbury mixer may be employed.

The resulting blend is melted and kneaded. In this process, the blend is heated in a kneader such as an extruder or a heat roller, so that other solid components can be dispersed homogeneously into the melted synthetic resin. Then, pellets are formed from the resulting mixture. Next, the pellets are ground. In this process, a grinding machine such as an atomizer or a jet mill may be employed. A powdered paint is thus obtained. The powdered paint is treated by a cyclone classifier to remove fine particles so as to satisfy the conditions as above, i.e., wherein the mean particle diameter is in the range of 5 to 20 µm and the proportion of particles 5 µm and less in diameter is up to 25 percent by weight, resulting in the final powdered paint.

In the above-mentioned manufacturing process, the raw material for powdered paint which contains a synthetic resin, a pigment and the other additives, preferably contains particles other than those of the synthetic resin, such that the proportion of particles of diameter under 700 µm is at least 40 percent by weight, preferably 60 percent by weight. Such a raw material for powdered paint provides pellets in which the pigment and additive are homogeneously dispersed into the resin component. Consequently, each raw material component composing the powdered paint is homogeneously contained in the particles obtained by grinding these pellets. The amount of particles composed of exclusively the resin component, the pigment component, or the additive component is thereby reduced. Thus, in the film coating formation process to be described, the powdered paint made of the raw material as specified provides a film coating which is superior to the conventional powdered paint in such aspects of appearance as smoothness, since among other things, a homogeneous hardening reaction of the resin is facilitated.

A method of manufacturing powdered paints is not restricted to the above-described method. For example, a mixture, obtained by blending the raw material in a melted state, may be pulverized by a spray drying process.

Wherein fine resin particulates are to be joined with the powdered paint, the above-described fine resin particulates are added to the obtained powdered paint and then mixed. The mixing of the powdered paint and the fine resin particulates can be performed by a conventional mixer such as super mixer, a Henschel mixer, or a Hybridizer ball mill. Conditions under which the powdered paint and the fine resin particulates are combined can be set as desired by properly selecting a mixer and a mixing mode. For example, wherein the Hybridizer ball mill is used, a powdered paint consisting of a particle mass in which fine resin particulates are superficially embedded in the particles can be obtained.

Powdered paints in accordance with the present invention can be applied to various types of articles for painting such as steel plate, zinc phosphate-treated steel plate, or aluminum plate in automobile construction; or sundry electrical appliances and building materials, for example. When forming a film coating of the powdered paint on such articles, a conventional method such as the electrostatic spray method or the fluidized dip coating method can be employed to apply the powdered paint. The applied powdered paint is then subjected to a baking treatment, whereby the resin component in the powdered paint is melted, forming a continuous film coating.

The powdered paint, which is manufactured from a raw material for powdered paint composed of a particle mass containing 50 percent by weight raw material particles of diameter under 700 µm, contains a pigment and other additives in an approximately homogeneous blend such that its hardening reaction takes place homogeneously when forming a film coating. Therefore, even wherein the specifications as to mean particle diameter and so on as described above are not satisfied, such a powdered paint is yet capable of forming a film coating which is of superior appearance to the conventional powdered paint.

### DESCRIPTION OF THE PREFERRED EMBODIMENTS

### Preparation of Acrylic Resin

Sixty-three parts xylene was charged into a reactor and then heated to 130° C. Next, a monomer mixture containing 45 parts glycidyl methacrylate, 25 parts styrene, 29.72 parts of methyl methacrylate and 0.28 parts 2-ethyl hexyl methacrylate, and 5.0 parts of t-butyl peroctate was drip-added over a three-hour period in an atmosphere of nitrogen. After a 30-minute interval during which the temperature was maintained, one part t-butyl peroctate was further drip-added over a 30-minute period, following which the temperature was sustained for one hour. Next, the solvent was removed by heating to 130° C under reduced pressure, whereby an acrylic resin was obtained. This preparation exhibited a Tg point of 60° C and a mean molecular weight of 3,500, and was employed as the acrylic resin for powdered paints in the following Examples 1 to 4 and Comparative Examples 1 to 3.

### Example 1

A particle mass of raw material for powdered paint was obtained by blending the following into a homogeneous mixture: 48.2 parts of the acrylic resin; 12.0 parts 1,10-decanedicarboxylic acid (DDA); 0.29 parts benzoin; 0.10 parts polysiloxane surface modifier YF-391f (manufactured by Toshiba Silicone Co., Ltd.); and 2.20 parts bisphenol A-type epoxy resin YD-012 (manufactured by Tohto Kasei); wherein the mean particle diameter was 800 µm and the proportion of particles of diameter of under 700 µm was less than 40 percent by weight. The mixture was then melted and kneaded to form pellets with a Co-kneader PR-46 (manufactured by Bus Co., Swiss).

The obtained pellets were then ground by atomization. The resulting powder was classified so as to produce an acrylic resin powdered paint in which the mean particle diameter was 12 µm and the proportion of particles 5 µm and less in diameter was adjusted to be no more than 25 parts by weight.

### Example 2

A powdered paint was manufactured similarly to Example 1, except that a raw material particle mass in which the mean particle diameter was 800 µm, and the proportion of particles of diameter under 700 µm was not less than 40 percent by weight, was used in place of the particle mass as specified in Example 1.

### Example 3

A solution containing 87 parts methyl methacrylate, 10 parts styrene, and 3 parts methacrylic acid in mixture was drop-added over a 60-minute interval into a reactor charged with a solvent. Following this, the mixture was stirred at 80° C for 60 minutes, providing an emulsion having 20 percent non-volatile content and particulate diameter in the range of 0.03 to 0.05 µm. The emulsion was spray-dried, producing an acrylic resin fine powder having a 100° C Tg point.

The finely powdered acrylic resin was added to the acrylic resin powdered paint obtained in Example 2 and mixed in the dry state for 30 seconds with a Henschel mixer. The ratio in mixture of the acrylic resin fine powder was adjusted to be 1.0 percent by weight of the powdered paint.

Observation through an electron microscope confirmed that this powdered paint was an ultra-fine pulverized resin paint (hereinafter referred to as "UF pulverized paint") in which the acrylic resin fine powder was adhered to the individual particles of the powdered paint.

### Example 4

The finely powdered acrylic resin obtained in Example 3 was added to the acrylic resin powdered paint obtained in Example 1, and mixed homogeneously under the same conditions as Example 3. The ratio in mixture of the acrylic resin fine powder was adjusted to be 1.0 percent by weight of the powdered paint.

Observation through an electron microscope confirmed that this powdered paint was a UF pulverized paint similar to that of Example 3.

### Comparative Example 1

The acrylic resin powdered paint obtained in Example 2 was classified to produce an acrylic resin powdered paint consisting of a particle mass in which the mean particle diameter was 12 µm and the proportion of particles 5 µm and less in diameter was greater than 25 percent by weight.

### Comparative Example 2

The acrylic resin powdered paint obtained in Example 2 was classified to produce an acrylic resin powdered paint of consisting of a particle mass in which the mean particle diameter was 30 µm and the proportion of particles 5 µm and less in diameter was greater than 25 percent by weight.

### Comparative Example 3

The acrylic resin fine powder obtained in Example 3 was added to the powdered paint obtained in Comparative Example 2, and mixed under the same conditions as Example 3. The ratio in mixture of the acrylic resin fine powder was adjusted to be 1.0 percent by weight of the powdered paint.

Observation through an electron microscope confirmed that this powdered paint was a UF pulverized paint, likewise as in Example 3.

### Comparative Example 4

The pellets obtained in Example 1 were ground by atomization. The resulting powder was classified to produce an acrylic resin powdered paint consisting of a particle mass in which the mean particle diameter was 12 µm and the proportion of particles 5 µm and less in diameter was greater than 25 percent by weight.

### Comparative Example 5

The pellets obtained in Example 1 were ground by atomization. The resulting powder was classified to produce an acrylic resin powdered paint consisting of a particle mass in which the mean particle diameter was 30 µm and the proportion of particles 5 µm and less in diameter was greater than 25 percent by weight.

### Evaluation

The fluidity and the appearance of film coatings from the powdered paints obtained in the Examples and Comparative Examples were evaluated. The following describes the evaluation method.

### (1) Fluidity

The lay angle of the powdered paint was measured. A smaller lay angle indicates better fluidity.

### (2) Appearance of Film Coating

The powdered paint was uniformly applied to a steel plate by the electrostatic coating method and was subjected to a 140° C baking treatment for 20 minutes. The resulting film coating was evaluated visually in terms of smoothness and gloss. The evaluation criteria are as follows:
Ⓞ : Very Good
○ : Good
△ : Slightly Poor
X : Poor
Table 1 shows the evaluation results.

It will be observed that numerous variations and modifications may be effected. The preferred embodiments described above are therefore illustrative and not restrictive.

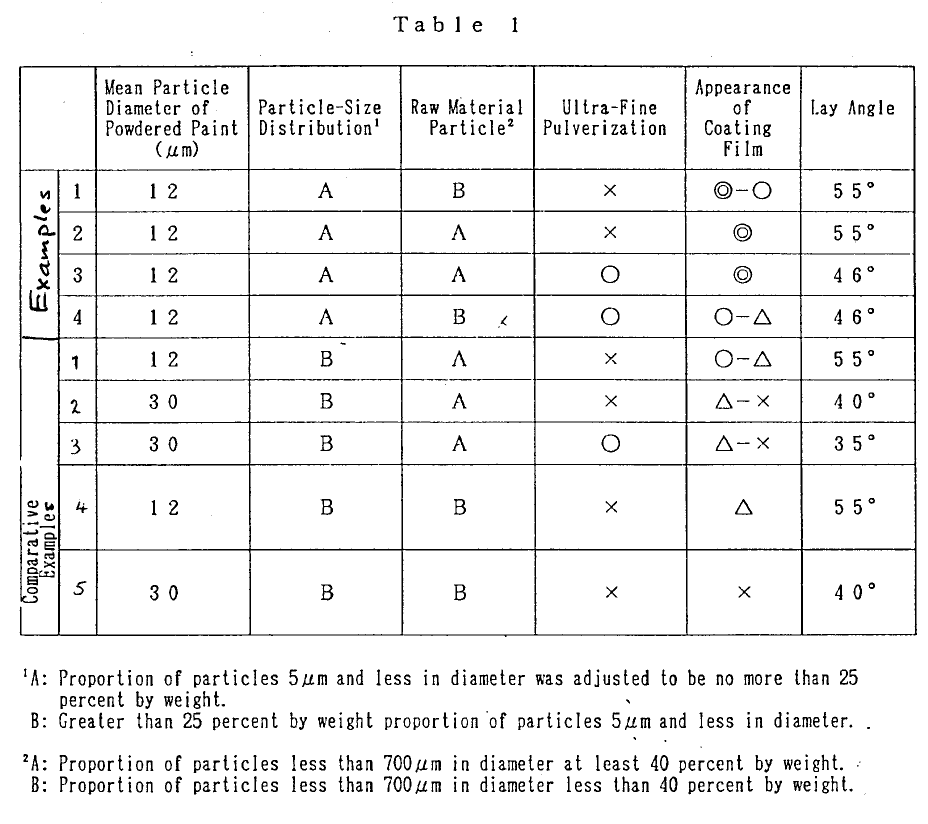

## Claims

1. A powdered paint composed of a particle mass with a mean particle diameter in the range of 5 to 20 µm and a proportion therein of particles 5 µm or less in diameter being not more than 25 percent by weight, said particle diameter measured by the laser scattering method;
wherein said particle mass is obtained by a process comprising:
melting and kneading a raw material for powdered paint and producing pellets therefrom, wherein said raw material contains a synthetic resin and at least one selected from the group consisting of a pigment and an additive with the proviso that said synthetic resin does not consist essentially of only a polyester resin and an epoxy resin;
grinding said pellets into pulverized particles; and
classifying said pulverized particles to obtain said particle mass.

2. A powdered paint in accordance with Claim 1, wherein said mean particle diameter is in the range of 8 to 16 µm.

3. A powdered paint in accordance with Claim 1 or 2, wherein the proportion of particles 5 µm or less in diameter is not more than 16 percent by weight.

4. A powdered paint in accordance with Claim 1 or 2, wherein at least 40 percent by weight of said raw material before producing pellets comprises particles less than 700 µm in diameter.

5. A powdered paint in accordance with any one of the Claims 1 to 4, wherein said additive is at least one selected from the group consisting of a surface conditioner, a plasticizer, an ultraviolet absorber, an antioxidant, a pinhole controlling agent, a pigment dispersing agent, and a curing agent.

6. A powdered paint in accordance with Claim 5, wherein said surface conditioner is at least one member selected from the group consisting of polysiloxane and acrylic resin.

7. A powdered paint in accordance with any one of the Claims 1 to 6, wherein said pigment is at least one selected from the group consisting of titanium dioxide, red iron oxide, yellow iron oxide, carbon black, copper phthalocyanine blue, copper phthalocyanine green, and quinacridone red pigment.

8. A powdered paint in accordance with one or more of the Claims 1 to 7, wherein said synthetic resin is one selected from the group consisting of thermosetting resins and thermoplastic resins.

9. A powdered paint in accordance with Claim 8, wherein said thermosetting resin is one selected from the group consisting of epoxy resins, acrylic resins, and polyester resins.

10. A powdered paint in accordance with Claim 8, wherein said thermoplastic resin is one selected from the group consisting of vinyl resins, polyethylene resins, and polyamide resins.

11. A powdered paint in accordance with any one of the Claims 1 to 10, further comprising fine resin particulates with a glass transition point in the range of 50 to 150°C, wherein a mean particle diameter of said fine resin particulates is less than that of said particle mass and wherein the proportion of said fine resin particulates is in the range of 0.05 to 35 percent by weight.

12. A powdered paint in accordance with Claim 11, wherein said glass transition point is in the range of 70 to 120°C.

13. A powdered paint in accordance with Claim 11 or 12, wherein said mean particle diameter of fine resin particulates is in the range of 0.001 to 10 µm.

14. A powdered paint in accordance with Claims 11, 12 or 13, wherein said fine resin particulates are particulates of a resin selected from the group consisting of vinyl resins, acrylic resins, epoxy resins, polyester resins, and melamine resins.

15. A method of manufacturing a powdered paint comprising the steps of:
melting and kneading a raw material for powdered paint and producing pellets therefrom, wherein said raw material contains a synthetic resin and at least one selected from the group consisting of pigment particles and additive particles with the proviso that said synthetic resin does not consist essentially of only a polyester resin and an epoxy resin; and
grinding said pellets into pulverized particles;
classifying said pulverized particles to obtain a particle mass with a mean particle diameter of 5 to 20 µm, the content of particles 5 µm or less in diameter being not more than 25 percent by weight, said particle diameter measured by the laser scattering method.

16. A method of manufacturing a powdered paint in accordance with Claim 15, wherein said pigment particles and said additive particles are of less than 700 µm diameter.

17. A method of manufacturing a powdered paint in accordance with Claim 15 or 16, wherein said powdered paint raw material contains not less than 50 percent by weight of said pigment particles and said additive particles.

18. A method of manufacturing a powdered paint in accordance with Claim 15, 16 or 17, further comprising the step of mixing said particle mass with fine resin particulates having a glass transition point in the range of 50 to 150°C and a mean particulate diameter of less than that of said particle mass, wherein the proportion of said fine resin particulates is in the range of 0.05 to 35 percent by weight.

19. A method of manufacturing a powdered paint in accordance with Claim 18, wherein said particle mass and said fine resin particulates are mixed using a hybridizer ball mill.

20. A powdered paint coating application method comprising the steps of:
applying to an object to be coated a powdered paint as defined in any one of the Claims 1 to 14; and
treating said powdered paint by a baking process.

21. A powdered paint coating application method in accordance with Claim 20, wherein said powdered paint is applied by one of either the electrostatic spray method and the fluidized dip coating method.

22. A powdered paint coating application method in accordance with Claim 20 or 21, wherein said object to be coated is one selected from the group consisting of an iron plate, a zinc phosphate-treated iron plate, and an aluminum plate.

## Patentansprüche

1. Pulverfarbe aus einer Teilchenmasse mit einem mittleren Teilchendurchmesser im Bereich von 5 bis 20 µm, wobei der Anteil von Teilchen mit einem Durchmesser von 5 µm oder weniger nicht mehr als 25 Gew.-% beträgt, und der Teilchendurchmesser durch Laserstreuung gemessen wurde;
und die Teilchenmasse erhalten wird nach einem Verfahren umfassend:
Schmelzen und Kneten eines Ausgangsmaterials für eine Pulverfarbe und Herstellung von Pellets davon, wobei das Ausgangsmaterial ein synthetisches Harz enthält und mindestens eine Komponente ausgewählt aus der Gruppe bestehend aus einem Pigment und einem Additiv, mit der Maßgabe, daß das synthetische Harz im wesentlichen nicht nur aus einem Polyesterharz und einem Epoxyharz besteht;
Mahlen der Pellets in pulverförmige Teilchen; und
Klassieren der pulverförmigen Teilchen unter Erhalt der Teilchenmasse.

2. Pulverfarbe nach Anspruch 1, dadurch gekennzeichnet, daß der mittlere Teilchendurchmesser im Bereich von 8 bis 16 µm liegt.

3. Pulverfarbe nach Anspruch 1 oder 2, dadurch gekennzeichnet, daß der Anteil an Teilchen mit einem Durchmesser von 5 µm oder weniger nicht mehr als 16 Gew.-% beträgt.

4. Pulverfarbe nach Anspruch 1 oder 2, dadurch gekennzeichnet, daß mindestens 40 Gew.-% des Ausgangsmaterials vor der Herstellung von Pellets Teilchen mit einem Durchmesser von weniger als 700 µm umfassen.

5. Pulverfarbe nach einem der Ansprüche 1 bis 4, dadurch gekennzeichnet, daß das Additiv mindestens ein solches ist ausgewählt aus der Gruppe bestehend aus einem Oberflächenvergütungsmittel, einem Weichmacher, einem Ultraviolett-Absorptionsmittel, einem Antioxidans, einem Mittel gegen Pinholebildung, einem Pigmentdispersionsmittel, und einem Härtungsmittel.

6. Pulverfarbe nach Anspruch 5, dadurch gekennzeichnet, daß das Oberflächenvergütungsmittel mindestens ein solches ist ausgewählt aus der Gruppe bestehend aus Polysiloxan und Acrylharz.

7. Pulverfarbe nach einem der Ansprüche 1 bis 6, dadurch gekennzeichnet, daß das Pigment mindestens ein solches ist ausgewählt aus der Gruppe bestehend aus Titandioxid, rotem Eisenoxid, gelbem Eisenoxid, Ruß, Kupferphthalocyaninblau, Kupferphthalocyaningrün und Chinacridonrot.

8. Pulverfarbe nach einem oder mehreren der Ansprüche 1 bis 7, dadurch gekennzeichnet, daß das synthetische Harz ein solches ist ausgewählt aus der Gruppe bestehend aus wärmehärtbaren und thermoplastischen Harzen.

9. Pulverfarbe nach Anspruch 8, dadurch gekennzeichnet, daß das wärmehärtbare Harz ein solches ist ausgewählt aus der Gruppe bestehend aus Epoxyharzen, Acrylharzen und Polyesterharzen.

10. Pulverfarbe nach Anspruch 8, dadurch gekennzeichnet, daß das thermoplastische Harz ein solches ist ausgewählt aus der Gruppe bestehend aus Vinylharzen, Polyethylenharzen und Polyamidharzen.

11. Pulverfarbe nach einem der Ansprüche 1 bis 10, dadurch gekennzeichnet, daß sie außerdem feine Harzteilchen mit einem Glasübergangspunkt im Bereich von 50 bis 150 °C umfaßt, wobei der mittlere Teilchendurchmesser der feinen Harzteilchen kleiner ist als der der Teilchenmasse, und worin der Anteil der feinen Harzteilchen im Bereich von 0,05 bis 35 Gew.-% liegt.

12. Pulverfarbe nach Anspruch 11, dadurch gekennzeichnet, daß der Glasübergangspunkt im Bereich von 70 bis 120 °C liegt.

13. Pulverfarbe nach Anspruch 11 oder 12, dadurch gekennzeichnet, daß der mittlere Teilchendurchmesser der feinen Harzteilchen im Bereich von 0,001 bis 10 µm liegt.

14. Pulverfarbe nach Anspruch 11, 12 oder 13, dadurch gekennzeichnet, daß die feinen Harzteilchen Teilchen eines Harzes sind ausgewählt aus der Gruppe bestehend aus Vinylharzen, Acrylharzen, Epoxyharzen, Polyesterharzen und Melaminharzen.

15. Verfahren zur Herstellung einer Pulverfarbe mit den Stufen:
Schmelzen und Kneten eines Ausgangsmaterials für die Pulverfarbe und Herstellung von Pellets davon, wobei das Ausgangsmaterial ein synthetisches Harz enthält und mindestens eine Komponente ausgewählt aus der Gruppe bestehend aus pigmentteilchen und Additivteilchen, mit der Maßgabe, daß das synthetische Harz im wesentlichen nicht nur aus Polyesterharz und Epoxyharz besteht; und Mahlen der Pellets zu pulverförmigen Teilchen;
Klassieren der pulverförmigen Teilchen unter Erhalt einer Teilchenmasse mit einem mittleren Teilchendurchmesser von 5 bis 20 µm, wobei der Gehalt an Teilchen mit einem Durchmesser von 5 µm oder weniger nicht mehr als 25 Gew.-% beträgt, und der Teilchendurchmesser durch Laserstreuung gemessen wurde.

16. Verfahren zur Herstellung einer Pulverfarbe nach Anspruch 15, dadurch gekennzeichnet, daß die Pigmentteilchen und die Additivteilchen einen Durchmesser von weniger als 700 µm besitzen.

17. Verfahren zur Herstellung einer Pulverfarbe nach Anspruch 15 oder 16, dadurch gekennzeichnet, daß das Ausgangsmaterial für die Pulverfarbe nicht weniger als 50 Gew.-% der Pigmentteilchen und der Additivteilchen enthält.

18. Verfahren zur Herstellung einer Pulverfarbe nach Anspruch 15, 16 oder 17, dadurch gekennzeichnet, daß es außerdem die Stufe umfaßt: Mischen der Teilchenmasse mit feinen Harzteilchen mit einem Glasübergangspunkt im Bereich von 50 bis 150 °C und einem mittleren Teilchendurchmesser, der geringer ist als der der Teilchenmasse, und worin der Anteil der feinen Harzteilchen im Bereich von 0,05 bis 35 Gew.-% liegt.

19. Verfahren zur Herstellung einer Pulverfarbe nach Anspruch 18, dadurch gekennzeichnet, daß die Teilchenmasse und die feinen Harzteilchen unter Verwendung einer Hybrid-Kugelmühle gemischt werden.

20. Pulverfarbbeschichtungsverfahren mit den Stufen: Applizieren einer Pulverfarbe nach einem der Ansprüche 1 bis 14 auf ein zu beschichtendes Substrat; und Hitzebehandeln der Pulverfarbe.

21. Pulverfarbbeschichtungsverfahren nach Anspruch 20, dadurch gekennzeichnet, daß die Pulverfarbe durch elektrostatisches Sprühbeschichten oder Wirbelschicht-Tauchbeschichten appliziert wird.

22. Pulverfarbbeschichtungsverfahren nach Anspruch 20 oder 21, dadurch gekennzeichnet, daß das zu beschichtende Substrat ein solches ist ausgewählt aus der Gruppe bestehend aus einer Eisenplatte, einer Zinkphosphatbehandelten Eisenplatte, und einer Aluminiumplatte.

## Revendications

1. Peinture pulvérulente composée d'une masse particulaire possédant un diamètre de particule moyen compris entre 5 et 20 µm et une proportion de particules de diamètre inférieur ou égal à 5 µm non-supérieure à 25 pourcent en poids, ledit diamètre des particules étant mesuré par la méthode de diffusion laser ;
dans laquelle ladite masse particulaire est obtenue via un procédé consistant à :
faire fondre et malaxer une matière brute destinée à la peinture pulvérulente et produire des pastilles à partir de celle-ci, ladite matière brute contenant une résine synthétique et au moins un composant sélectionné parmi le groupe constitué d'un pigment et d'un additif, à condition que ladite résine synthétique ne se constitue pas essentiellement uniquement d'une résine polyester et d'une résine époxy ;
broyer lesdites pastilles sous la forme de particules pulvérisées ; et
tamiser lesdites particules pulvérisées afin d'obtenir ladite masse particulaire.

2. Peinture pulvérulente selon la revendication 1, dans laquelle ledit diamètre de particule moyen se situe dans la plage allant de 8 à 16 µm.

3. Peinture pulvérulente selon la revendication 1 ou 2, dans laquelle la proportion de particules possédant un diamètre inférieur ou égal à 5 µm ne dépasse pas 16 pourcent en poids.

4. Peinture pulvérulente selon la revendication 1 ou 2, dans laquelle au moins 40 pourcent en poids de ladite matière brute, avant la production des pastilles, se constitue de particules possédant un diamètre inférieur à 700 µm.

5. Peinture pulvérulente selon l'une quelconque des revendications 1 à 4, dans laquelle ledit additif est au moins un additif sélectionné parmi le groupe constitué d'un agent de conditionnement surfacique, d'un agent plastifiant, d'un absorbeur d'ultraviolets, d'un antioxydant, d'un agent d'atténuation des piqûres, d'un agent de dispersion de pigment, et d'un agent durcisseur.

6. Peinture pulvérulente selon la revendication 6, dans laquelle ledit agent de conditionnement surfacique est au moins un élément sélectionné parmi le groupe constitué de polysiloxane et de résine acrylique.

7. Peinture pulvérulente selon l'une quelconque des revendications 1 à 6, dans laquelle ledit pigment est au moins un pigment sélectionné parmi le groupe constitué de dioxyde de titane, d'oxyde de fer rouge, d'oxyde de fer jaune, de noir de carbone, de bleu de phtalocyanine de cuivre, de vert de phtalocyanine de cuivre, et de pigment rouge de quinacridone.

8. Peinture pulvérulente selon l'une quelconque des revendications 1 à 7, dans laquelle ladite résine synthétique est une résine sélectionnée parmi le groupe constitué de résines thermodurcissables et de résines thermoplastiques.

9. Peinture pulvérulente selon la revendication 8, dans laquelle ladite résine thermodurcissable est une résine sélectionnée parmi le groupe constitué de résines époxy, de résines acryliques et de résines polyester.

10. Peinture pulvérulente selon la revendication 8, dans laquelle ladite résine thermoplastique est une résine sélectionnée parmi le groupe constitué de résines vinyliques, de résines de polyéthylène et de résines de polyamide.

11. Peinture pulvérulente selon l'une quelconque des revendications 1 à 10, comportant en outre de fines particules de résine possédant un point de transition vitreuse compris entre 50 et 150°C, dans laquelle un diamètre de particule moyen desdites fines particules de résine est inférieur à celui de ladite masse particulaire et dans laquelle la proportion desdites fines particules de résine se situe dans la plage allant de 0,05 à 35 pourcent en poids.

12. Peinture pulvérulente selon la revendication 11, dans laquelle ledit point de transition vitreuse se situe dans la plage allant de 70 à 120°C.

13. Peinture pulvérulente selon la revendication 11 ou 12, dans laquelle ledit diamètre de particule moyen des fines particules de résine se situe dans la plage allant de 0,001 à 10 µm.

14. Peinture pulvérulente selon la revendication 11, 12 ou 13, dans laquelle lesdites fines particules de résine sont des particules d'une résine sélectionnée parmi le groupe constitué de résines vinyliques, de résines acryliques, de résines époxy, de résines de polyester et de résines à la mélamine.

15. Procédé pour fabriquer une peinture pulvérulente comportant les étapes consistant à :
faire fondre et malaxer une matière brute destinée à la peinture pulvérulente et produire des pastilles à partir de celle-ci, ladite matière brute contenant une résine synthétique et au moins un composant sélectionné parmi le groupe constitué de particules de pigment et de particules d'additif, à condition que ladite résine synthétique ne se constitue pas essentiellement de seulement une résine polyester et une résine époxy ; et
broyer lesdites pastilles sous la forme de particules pulvérisées ;
tamiser lesdites particules pulvérisées afin d'obtenir une masse particulaire possédant un diamètre de particule moyen compris entre 5 et 20 µm, la proportion de particules possédant un diamètre inférieur ou égal à 5 µm ne dépassant pas 25 pourcent en poids, ledit diamètre des particules étant mesuré par la méthode de diffusion laser.

16. Procédé pour fabriquer une peinture pulvérulente selon la revendication 15, dans lequel lesdites particules de pigment et lesdites particules d'additif possèdent un diamètre inférieur à 700 µm.

17. Procédé pour fabriquer une peinture pulvérulente selon la revendication 15 ou 16, dans lequel ladite matière brute de la peinture pulvérulente ne contient pas moins de 50 pourcent en poids desdites particules de pigment et desdites particules d'additif.

18. Procédé pour fabriquer une peinture pulvérulente selon la revendication 15, 16 ou 17, comportant en outre l'étape consistant à mélanger ladite masse particulaire avec de fines particules de résine possédant un point de transition vitreuse se situant dans la plage allant de 50 à 150°C et un diamètre de particule moyen inférieur à celui de ladite masse particulaire, dans lequel la proportion desdites fines particules de résine se situe dans la plage allant de 0,05 à 35 pourcent en poids.

19. Procédé pour fabriquer une peinture pulvérulente selon la revendication 18, dans lequel ladite masse particulaire et lesdites fines particules de résine sont mélangées en utilisant un moulin à billes du type "hybridizer".

20. Procédé d'application de revêtement de peinture pulvérulente comportant les étapes consistant à :
appliquer sur un objet à enduire une peinture pulvérulente telle que définie dans l'une quelconque des revendications 1 à 14 ; et
traiter ladite peinture pulvérulente par un traitement de cuisson.

21. Procédé d'application de revêtement de peinture pulvérulente selon la revendication 20, dans lequel ladite peinture pulvérulente est appliquée par le procédé de pulvérisation électrostatique ou par le procédé d'enduction par immersion en bain fluidisé.

22. Procédé d'application de revêtement de peinture pulvérulente selon la revendication 20 ou 21, dans lequel ledit objet à enduire est un objet sélectionné parmi le groupe constitué d'une plaque de fer, d'une plaque de fer traitée au phosphate de zinc et d'une plaque d'aluminium.
